# EUROPÄISCHE PATENTSCHRIFT

(11) **EP 0 924 541 B1**
(45) Veröffentlichungstag und Bekanntmachung des Hinweises auf die Patenterteilung: **11.09.2002**
(21) Anmeldenummer: 98123704.3
(22) Anmeldetag: 12.12.1998
(51) Int. Cl.: G02B 6/38, G02B 6/42

(54) **Vorrichtung und Verfahren zum Verbinden eines Lichtleiters mit einem Lichtkoppelelement**
Apparatus and method for coupling of a lightguide with a light coupling element
Appareil et méthode pour coupler un guide de lumière avec un élément de couplage de la lumière

(30) Priorität: 17.12.1997 DE 19756143
(43) Veröffentlichungstag der Anmeldung: 23.06.1999
(73) Patentinhaber: Hella KG Hueck & Co., 59552 Lippstadt (DE)
(72) Erfinder: Coerschulte, Holger, 59555 Lippstadt (DE); Giepen, Bernd, 59597 Erwitte (DE); Köneke, Josef, 33142 Büren (DE)

(56) Entgegenhaltungen:
- US-A- 4 923 272
- US-A- 5 577 144
- US-A- 5 640 478

## Beschreibung

Die Erfindung betrifft eine Vorrichtung und ein Verfahren zum Verbinden eines Lichtleiters mit einem Lichtkoppelelement.

Es ist bereits bekannt, den Endabschnitt eines Lichtleiters mit einem Lichtkoppelelement durch Verschrauben zu verbinden. Nachteilig an der bekannten Verbindungsart ist, daß der Lichtleiter beim Einsetzen in das Lichtkoppelelement um seine Längsachse verdreht werden muß und in der Befestigungsposition drehfest angeordnet ist. Ein anderes Beispiel einer solchen Vorrichtung ist im US 4.923.272 offenbart.

Aufgabe der vorliegenden Erfindung ist es, eine Vorrichtung und ein Verfahren zum Verbinden eines Lichtleiters mit einem Lichtkoppelelement anzugeben, so daß eine einfache Montage bzw. Demontage des Lichtleiters gewährleistet ist, wobei der Lichtleiter in der Verbindungsposition drehbar gelagert ist.

Zur Lösung dieser Aufgabe weist die Erfindung die Merkmale des Patentanspruchs 1 und des Patentanspruchs 10 auf.

Der Vorteil der Erfindung besteht insbesondere darin, daß der Lichtleiter durch ein auf den Endabschnitt des Lichtleiters aufgestecktes Verbindungselement, das mit einer Außennut versehen ist und mittels eines Federelements klemmend mit dem Lichtkoppelelement verbunden ist, so daß eine spannungsfreie vorgegebene Positionierung der Stirnfläche des Lichtleiters bezüglich des Lichtkoppelelements in axialer Richtung ermöglicht wird.
Vorteilhafterweise ist der Endabschnitt des Lichtleiters ausschließlich in axialer Richtung festgelegt, so daß der rotationssymmetrisch aufgebaute Lichtleiter einer etwaigen mechanischen Drehbeanspruchung während der Montage bzw. Demontage desselben ausgleichen kann.

Dadurch, daß der Endabschnitt des Lichtleiters zusammen mit dem auf diesem, axial gesicherten Verbindungselement in eine Öffnung des Lichtkoppelelements geradlinig eingesetzt wird und die vorgegebene Verbindungsposition durch ein Einrasten eines Federelements festgelegt wird, wird eine "Einhandmontage" ohne Einsatz eines Werkzeuges ermöglicht.

Erfindungsgemäß erfolgt die axiale Sicherung des auf den Endabschnitt aufgesetzten Verbindungselements in einem auf der dem Ende des Lichtleiters abgewandten Seite des Anschlags befindlichen Bereichs des Verbindungselements, wobei Einprägungen auf einem entsprechenden dünnwandigen Abschnitt des Verbindungselements vorgenommen werden. Vorzugsweise erfolgen diese Einprägungen als nach innen in radialer Richtung gerichtete Heißprägungen. Die Einprägungen erfolgen unmittelbar benachbart zu dem Anschlag der Hülse, so daß das Verbindungselement in axialer Richtung lagesicher gehalten ist.

Nach einer Weiterbildung der Erfindung weisen der erste und der zweite Zylinderabschnitt des Verbindungselements unterschiedliche Innendurchmesser auf unter Bildung einer zwischen dem ersten und zweiten Zylinderabschnitt angeordneten inneren Ringfläche zur Anlage an dem Anschlag der Hülse. Die Form der inneren Ringfläche ist an die Form des Anschlags angepaßt, so daß die entsprechende Anschlagfläche formschlüssig an der inneren Ringfläche anliegt.

Erfindungsgemäß weist das Verbindungselement eine Außennut auf, deren Lage zu Ausnehmungen eines auf das Verbindungselement aufzusetzenden Ansatzes des Lichtkoppelelements korrespondiert. Vorzugsweise ist die Außennut in einem dem zweiten Zylinderabschnitt nahen Bereich angeordnet, so daß die Befestigung des Lichtleiters in einem nicht störenden Endbereich des Ansatzes des Lichtkoppelelements erfolgt.

Nach einer Weiterbildung der Erfindung ist das Federelement als U-förmiges Federelement mit nach innen weisenden Nasen an den jeweiligen Enden der Schenkel ausgebildet. Die Form der Feder ist an die Außenkontur des Ansatzes des Lichtkoppelelements angepaßt und ermöglicht durch einschnappende Umklammerung des Verbindungselements in einem durch die Außennut des Verbindungselements und der Ausnehmung des Ansatzes des Lichtkoppelelements gebildeten Spalt eine sichere Befestigung des Lichtleiters in dem Lichtkoppelelement.

Ein Ausführungsbeispiel der Erfindung wird nachfolgend anhand der Zeichnungen näher beschrieben.

Es zeigen:
- Figur 1: einen Längsschnitt durch eine erfindungsgemäße Vorrichtung in der Verbindungsposition,
- Figur 2: eine Seitenansicht eines Ansatzes des Lichtkoppelelements und
- Figur 3: einen Querschnitt durch die erfindungsgemäße Vorrichtung entlang der Linie III - III gemäß Figur 1 vor dem Aufsetzen eines Federelements.

Die erfindungsgemäße Vorrichtung dient zum Verbinden eines Lichtleiters mit einem Lichtkoppelelement, das als Lichtauskoppel- oder als Lichteinkoppelelement ausgebildet ist. Die unten beschriebene Vorrichtung dient zum Verbinden eines Lichtleiters mit einem Lichtauskoppelelement in einem Kraftfahrzeug, wobei von einer nicht dargestellten Lichtquelle das Licht über den Lichtleiter zu dem Lichtauskoppelelement übertragen wird und von dem Lichtauskoppelelement, das bereichsweise in einer Öffnung einer Kraftfahrzeugwand angeordnet ist, zur Beleuchtung eines Innenraumes oder einen vorgegebenen Bereich eines Raumes außerhalb des Kraftfahrzeugs abgestrahlt wird.

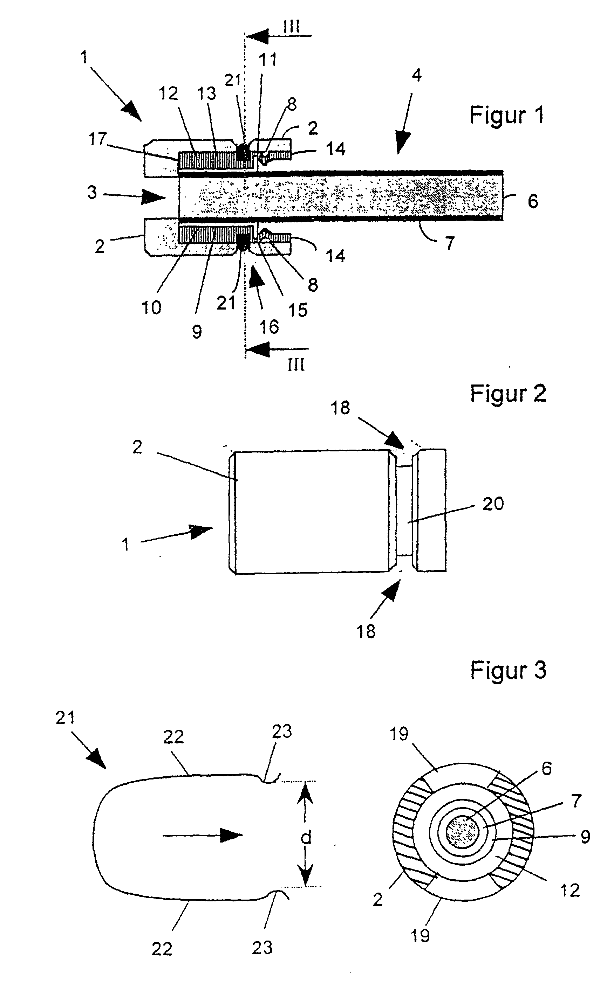

Figur 1 zeigt ein Lichtauskoppelelement (1) mit einem Ansatz (2), der eine Aussparung aufweist, in die ein Endabschnitt (3) eines Lichtleiters (4) eingesetzt und befestigt wird. Das Lichtauskoppelelement (1) ist in bekannter Weise auf einer Innenseite einer Fahrzeugtürwand befestigt und dient zur Auskopplung des mittels des Lichtleiters (4) übertragenen Lichtes in einen vor der Fahrzeugtür befindlichen Raum zur Ausleuchtung desselben.

Der Lichtleiter (4) weist ein inneres Lichtübertragungsmedium (6) aus Glas, eine dieses umfangsseitig umgebende Schutzummantelung (7) aus Kunststoff und in dem Endabschnitt (3) eine metallische Hülse (9) mit einem Schaft (10) und einem Anschlag (11) auf. Die Hülse (9) wird mit ihrem Anschlag (11) auf den Endabschnitt (3) aufgebracht und durch Krimpen mit demselben unlösbar verbunden.

Nachfolgend wird auf die Hülse (9) ein hohlförmiges Verbindungselement (12), das aus einem Kunststoff, beispielsweise PC oder ABS, durch Spritzgießen hergestellt ist, aufgesetzt. Das Verbindungselement (12) besteht aus einem dickwandigen ersten Zylinderabschnitt (13), der mit Spiel auf dem Schaft (10) der Hülse (9) gelagert ist, und einem dünnwandigen zweiten Zylinderabschnitt (14), der sich auf der dem Ende des Lichtleiters (4) abgewandten Seite des Anschlags (11) erstreckt. Die Außendurchmesser der Zylinderabschnitte (13) und (14) sind gleich. Der Innendurchmesser des zweiten Zylinderabschnitts (14) ist größer als der Innendurchmesser des ersten Zylinderabschnitts (13). In einem inneren Bereich zwischen dem ersten Zylinderabschnitt (13) und dem zweiten Zylinderabschnitt (14) ist eine innere Ringfläche (15) gebildet, deren Kontur zu der entsprechenden Fläche des Anschlags (11) korrespondiert und an dieser zur Anlage kommt. Zur axialen Lagesicherung des Verbindungselements (12) auf der Hülse (9) sind mehrere punktuelle Einprägungen (8) in einem unmittelbar zum Anschlag (11) angrenzenden Umfangsbereich des zweiten Zylinderabschnitts (14) ausgebildet. Diese Einprägungen (8) erfolgen vorzugsweise als Heißprägungen und sind radial nach innen gerichtet. Das Verbindungselement (12) ist nun in axialer Richtung unverschiebbar auf der Hülse (9) angeordnet. In Umfangsrichtung ist das Verbindungselement (12) drehbar angeordnet. Sowohl das Verbindungselement (12) als auch der Endabschnitt (3) des Lichtleiters (4) sind rotationssymmetrisch ausgebildet. Der erste Zylinderabschnitt (13) weist in einem zu dem Anschlag (11) nahen Bereich eine Außennut (16) auf, die sich ringförmig um den Zylinderabschnitt (13) erstreckt.

Zur Befestigung des Endabschnitts (3) des Lichtleiters (4) in dem Ansatz (2) des Lichtauskoppelelements (1) wird der Endabschnitt (3) zusammen mit dem Verbindungselement (12) in die Aussparung des Ansatzes (2) eingebracht, bis die Stirnseite des Endabschnitts (3) an einer Anschlagfläche (17) des Ansatzes (11) zur Anlage kommt. In dieser Verbindungsposition korrespondiert de Außennut (16) des Verbindungselements (12) zu zwei sich umfangsseitig des zylinderförmigen Ansatzes (2) erstreckenden gegenüberliegenden Ausnehmungen (18) des Ansatzes (2). Die Ausnehmungen (18) bilden zwei Ringausschnitte, die sich jeweils über einen spitzen Winkelbereich erstrecken. In einem sich umfangsseitig anschließenden Bereich der Ringausschnitte (19) weist der Ansatz (2) Rillen (20) auf. Diese Rillen (20) dienen dazu, daß ein U-förmiges Federelement (21) von außen in einer beliebigen Position zu dem Ansatz (2) angelegt werden kann und nachfolgend unter einschnappender Umklammerung des Ansatzes (2) in der Rille (20) bzw. in dem Ringausschnitt (19) gelagert ist unter Anlage in der Außennut (16) des Verbindungselements (12). Zu diesem Zweck weist das U-förmige Federelement (21) an den gegenüberliegenden Enden der Schenkel (22) jeweils eine nach innen weisende Nase (23) auf, die nach dem Anlegen des Federelements (21) in einem ersten Schritt nach einer öffnenden Bewegung in dem Ringausschnitt (19) auf der Außennut (16) zur Anlage kommen und in einem zweiten Schritt unter Öffnung des Federelements (21) den Ansatz (2) einschnappend hintergreifen, wobei die Schenkel (22) des Federelements (21) klemmend in der Rille (20) bzw. in den gegenüberliegenden Ringausschnitten (19) sowie in der Außennut (16) des Verbindungselements (12) anliegen. Das Federelement (21) ist vorzugsweise derart ausgebildet, daß der Abstand (d) zwischen den Nasen (23) kleiner ist als die Länge einer gedachten Sehne zwischen den korrespondierenden Enden der gegenüberliegenden Ringausschnitte (19). Durch die symmetrische Anordnung der gegenüberliegenden Rillen (20) bzw. der Ringausschnitte (19) ist eine definierte Länge der Öffnungsbewegung der Schenkel (22) vorgegeben, die in beiden Teilschritten vollzogen wird. Damit ist eine begrenzte Ausdehnung des Federelements (21) verbunden, die ein mehrfaches Betätigen des als Metallfeder ausgebildeten Federelements (21) ohne Beeinträchtigung der Federeigenschaften ermöglicht.

## Patentansprüche

1. Lichtleiterendstück bestehend aus einem Lichtkoppelelement und einem Lichtleiter wobei das Lichtkoppelelement besteht aus
- einer an einem Endabschnitt (3) des Lichtleiters (4) befestigten Hülse (9) mit einem Schaft (10) und einem von dem Ende des Lichtleiters (4) beabstandeten Anschlag (11),
- einem auf die Hülse (9) aufgesteckten hohlförmigen Verbindungselement (12), das in axialer Richtung auf der Hülse (9) lagegesichert ist,
**dadurch gekennzeichnet,**
- **dass** das Verbindungelement (12) in einem dem Anschlag (11) der Hülse (9) nahen Bereich radial nach innen weisende Einprägungen (8) aufweist zur axialen Lagesicherung des Verbindungselementes (12) bezüglich der Hülse (9),
- dass das Verbindungselement (12) in einer Aussparung eines Ansatzstückes (2) angeordnet ist und
- **dass** das Verbindungselement (12) eine umlaugende Außennut (16) aufweist, die zu einer Ausnehmung (18) des Ansatzstückes (2) korrespondiert,
- dass ein Federelement (21) in die Ausnehmung (18) des Ansatzstückes (2) und die Außennut (16) des Verbindungselementes (12) eingreift zur axialen Befestigung des Verbindungselementes (12) in dem Ansatzstück (1).

2. Vorrichtung nach Anspruch 1, **dadurch gekennzeichnet, dass** das Verbindungselement (12) zylinderförmig ausgebildet ist mit einem ersten Zylinderabschnitt (13), der mit Spielfassung auf der Hülse (9) angeordnet ist, und mit einem dünnwandigen zweiten Zylinderabschnitt (14), der auf der dem Ende des Lichtleiters (4) abgewandten Seite des Anschlags (11) angeordnet ist.

3. Vorrichtung nach Anspruch 1 oder 2, **dadurch gekennzeichnet, daß** der erste Zylinderabschnitt (13) und der zweite Zylinderabschnitt (14) einen unterschiedlichen Innendurchmesser aufweisen unter Bildung einer inneren Ringfläche (15) zur Anlage an dem Anschlag (11).

4. Vorrichtung nach einem der Ansprüche 1 bis 3, **dadurch gekennzeichnet, daß** die Außennut (16) des ersten Zylinderabschnitts (13) als kreisringförmige Außennut ausgebildet ist und sich in einem dem zweiten Zylinderabschnitt (14) nahen Bereich erstreckt.

5. Vorrichtung nach einem der Ansprüche 1 bis 4, **dadurch gekennzeichnet, daß** die Länge des ersten Zylinderabschnitts (13) zur Länge des Schaftes (10) der Hülse (9) korrespondiert.

6. Vorrichtung nach einem der Ansprüche 1 bis 5, **dadurch gekennzeichnet, daß** das Lichtauskoppelelement (1) einen hohlzylinderförmigen Ansatz (2) aufweist, dessen Ausnehmungen (18) durch zwei gegenüberliegende Ringausschnitte (19) gebildet sind.

7. Vorrichtung nach einem der Ansprüche 1 bis 6, **dadurch gekennzeichnet, daß** das Verbindungselement (12) und der Anschlag (11) den gleichen Außendurchmesser aufweisen.

8. Vorrichtung nach einem der Ansprüche 1 bis 7, **dadurch gekennzeichnet, daß** das Federelement (21) U-förmig ausgebildet ist mit nach innen weisenden Nasen (23) an den jeweiligen Enden der Schenkel (22), wobei der Abstand zwischen den Nasen (23) kleiner ist als die Länge der zwischen den korrespondierenden Enden der gegenüberliegenden Ringausschnitte (19) gedachten Sehne.

9. Vorrichtung nach einem der Ansprüche 1 bis 8, **dadurch gekennzeichnet, daß** die Schenkel (22) des Federelements (21) eine solche Länge aufweisen, daß das Federelement (21) als Schnappverschluß rastend in die Außennus (16) eingreift.

10. Verfahren zum Verbinden eines Lichtleiters (4) mit einem Lichtkoppelelement (1), wobei eine Hülse (9) mit einem von dem Ende (3) des Lichtleiters (4) beabstandenten Auschlag (11) auf einen Endabschnitt (3) des Lichtleiters (4) formschlüssig aufgebracht wird und wobei das Lichtkoppelelement (1) mittels eines hohlförmigen Verbindungselementes (12) mit dem Lichtleiter (4) verbunden wird, **dadurch gekennzeichnet, dass** das hohlförmige Verbindungselement (12) mit einer umlaufenden Außennut (16) versehen wird, auf die Hülse (9) aufgesetzt und in einem von dem Ende des Lichtleiters (4) abgewandten Endbereich desselben durch Heißprägen von radial nach innen weisenden Einprägungen an der Hülse (9) axial fixiert wird, und dass dann ein Ansatzstück mit einer Ausnehmung (18) so auf das Verbindungselement (12) aufgesetzt wird, daß diese Ausnehmung mit der Außennut (16) korrespondiert und dass ein Federelement (21) unter Verbiegung seiner Enden in die Ausnehmung (18) des Lichtkoppelelementes (1) und in die Außennut (16) des Verbindungselementes (12) eingerastet wird.

## Claims

1. Light conductor end piece comprising a light coupling element and a light conductor, and the light coupling element is composed of
• a sleeve (9) which is mounted onto an end section (3) of the light conductor (4) and which has a shaft (10) and a stop (11) which is distanced from the end of the light conductor (4),
• a tubular connecting element (12) which is pushed onto the sleeve (9) and which is on the sleeve (9) positionally secured in the axial direction,
**characterised in that**
• the connecting element (12) has in an area near the stop (11) of sleeve (9) radially inward oriented impressions (8) for axially securing the position of the connecting element (12) relative to the sleeve (9),
• the connecting element (12) is arranged in a cutout of an extension piece (2), and
• the connecting element (12) comprises an peripheral external groove (16) which corresponds with a cutout (18) of an extension piece (2),
• a spring element (21) engages the cutout (18) of the extension piece (2) and the external groove (16) of the connecting element (12) for the purpose of axially mounting the connecting element (12) in the extension piece (1).

2. Device according to Claim 1, **characterised in that** the connecting element (12) is of cylindrical design with a first cylinder section (13), which is arranged with a play socket on the sleeve (9), and with a thin walled second cylinder section (14) arranged at the side of the stop (11) facing away from the end of the light conductor (4).

3. Device according to Claim 1 or 2, **characterised in that** the first cylinder section (13) and the second cylinder section (14) have different inside diameters whilst forming an inner annular surface (15) for abutment against the stop (11).

4. Device according to one of Claims 1 to 3, **characterised in that** the external groove (16) of the first cylinder section (13) is designed as a circular external groove and extends in an area near the second cylinder section (14).

5. Device according to one of Claims 1 to 4, **characterised in that** the length of the first cylinder section (13) corresponds with the length of the shaft (10) of the sleeve (9).

6. Device according to one of Claims 1 to 5, **characterised in that** the light decoupling element (1) comprises a hollow cylindrical extension (2) the cutouts (18) of which are formed by to oppositely positioned circular cutouts.

7. Device according to one of Claims 1 to 6, **characterised in that** the connecting element (12) and the stop (11) have the same outside diameter.

8. Device according to one of Claims 1 to 7, **characterised in that** the spring element (21) is of U-shaped design and with inwardly oriented tabs (23) at the respective ends of the shanks (22), and the distance between the tabs (23) is shorter than the length of an imaginary fibre between the corresponding ends of the oppositely placed circular cutouts (19).

9. Device according to one of Claims 1 to 8, **characterised in that** the shanks (22) of the spring element (21) have such length that the spring element (21) detents the outside groove (16) like a spring catch.

10. Method for connecting a light conductor (4) to a light coupling element (1), and a sleeve (9) comprising a stop (11) distanced from the end (3) of the light conductor (4) is positively set onto an end section (3) of the light conductor (4), and the light coupling element (1) is connected to the light conductor (4) by means of a hollow connecting element (12), **characterised in that** the hollow connecting element (12) is provided with a peripheral external groove (16), placed on the sleeve (9) and axially fixed to the sleeve (9) by hot stamping radially inward oriented stamps in an end area facing away from the end of the light conductor (4), and an extension piece is then placed with a cutout (18) onto the connecting element (12) so that the cutout corresponds with the external groove (16) and a spring element (21) detents into the external groove (16) of the connecting element (12) whilst bending its ends into the cutout (18) of the light coupling element (1) and into the external groove of the connecting element (12).

## Revendications

1. Pièce d'extrémité de guide d'ondes optiques, constituée par un élément de couplage de lumière et par un guide d'ondes optiques, l'élément de couplage de lumière étant constitué par :
- une douille (9) fixée à un tronçon d'extrémité (3) du guide d'ondes (4), comportant une tige (10) et une butée (11) espacée de l'extrémité du guide d'ondes (4),
- un élément de liaison de forme creuse enfiché sur la douille (9), qui est fixé dans sa position sur la douille (9) en direction axiale,
**caractérisée en ce que** :
- l'élément de liaison (12) présente dans une région proche de la butée (11) de la douille (9) des empreintes orientées radialement vers l'intérieur, permettant de fixer l'élément de liaison (12) dans sa position par rapport à la douille (9),
- l'élément de liaison (12) est agencé dans un dégagement d'un embout (2), et
- l'élément de liaison (12) présente une gorge extérieure (16) périphérique qui correspond à un évidement (18) de l'embout (2),
- un élément à ressort (21) s'engage dans l'évidement (18) de l'embout (2) et dans la gorge extérieure (16) de l'élément de liaison (12) pour fixer axialement l'élément de liaison (12) dans l'embout (2).

2. Dispositif selon la revendication 1, **caractérisé en ce que** l'élément de liaison (12) est réalisé sous forme cylindrique avec un premier tronçon cylindrique (13) qui est agencé avec jeu sur la douille (9) et avec un deuxième tronçon cylindrique (14) à paroi mince qui est agencé sur le côté de la butée (11) qui est détourné de l'extrémité du guide d'ondes (4).

3. Dispositif selon l'une ou l'autre des revendications 1 et 2, **caractérisé en ce que** le premier tronçon cylindrique (13) et le deuxième tronçon cylindrique (14) présentent des diamètres intérieurs différents en formant une surface annulaire (15) intérieure pour venir en appui contre la butée (11).

4. Dispositif selon l'une des revendications 1 à 3, **caractérisé en ce que** la gorge extérieure (16) du premier tronçon cylindrique (13) est réalisée sous forme de gorge extérieure circulaire et **en ce qu'**elle s'étend dans une région proche du deuxième tronçon cylindrique (14).

5. Dispositif selon l'une des revendications 1 à 4, **caractérisé en ce que** la longueur du premier tronçon cylindrique (13) correspond à la longueur de la tige (10) de la douille (9).

6. Dispositif selon l'une des revendications 1 à 5, **caractérisé en ce que** l'élément de découplage de lumière (1) présente un embout (2) de forme cylindrique creuse dont des évidements (18) sont formés par deux découpes annulaires (19) opposées l'une à l'autre.

7. Dispositif selon l'une des revendications 1 à 6, **caractérisé en ce que** l'élément de liaison (12) et la butée (11) présentent le même diamètre extérieur.

8. Dispositif selon l'une des revendications 1 à 7, **caractérisé en ce que** l'élément ressort (21) est réalisé en forme de U avec des ergots (23) orientés vers l'intérieur sur l'extrémité respective des bras (22), la distance entre les ergots (23) étant inférieure à la longueur de corde imaginaire entre les extrémités correspondantes des découpes annulaires (19) opposées.

9. Dispositif selon l'une des revendications 1 à 8, **caractérisé en ce que** les branches (22) de l'élément ressort (21) présentent une longueur telle que l'élément ressort (21) s'engage par enclenchement dans la gorge extérieure (16) pour former une fermeture à encliquetage.

10. Procédé pour relier un guide d'ondes optiques (4) à un élément de couplage de lumière (1), une douille (9) étant montée par coopération de formes, avec une butée (11) espacée de l'extrémité (3) du guide d'ondes (4), sur un tronçon d'extrémité (3) du guide d'ondes (4) et l'élément de couplage de lumière (1) étant relié au moyen d'un élément de liaison (12) de forme creuse avec le guide d'ondes (4), **caractérisé en ce que** l'élément de liaison de forme creuse (12) est pourvu d'une gorge extérieure périphérique (16) et est placé sur la douille (9) et, dans une région d'extrémité du guide d'ondes (4) qui est détournée de l'extrémité de ce dernier, il est fixé sur la douille (9) par estampage à chaud d'empreintes orientées radialement vers l'intérieur, et **en ce qu'**ensuite, un embout avec un évidement (18) est placé sur l'élément de liaison (12) de sorte que cet évidement correspond à la gorge extérieure (16) et **en ce qu'**un élément ressort (21) est enclenché par déformation de ses extrémités dans l'évidement (18) de l'élément de couplage de lumière (1) et dans la gorge extérieure (16) de l'élément de liaison (12).
